(19) Europäisches Patentamt
European Patent Office
Office européen des brevets

(11) **EP 3 272 821 B1**

(12) **EUROPEAN PATENT SPECIFICATION**

(45) Date of publication and mention of the grant of the patent:
**29.08.2018 Bulletin 2018/35**

(51) Int Cl.:
***C09D 191/00*** (2006.01)

(21) Application number: **16180302.8**

(22) Date of filing: **20.07.2016**

(54) **EMULSION AND USE THEREOF FOR COATING A TEXTILE**

EMULSION UND VERWENDUNG DAVON ZUR BESCHICHTUNG EINES TEXTILS

ÉMULSION ET SON UTILISATION POUR LE REVÊTEMENT D'UN TEXTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(43) Date of publication of application:
**24.01.2018 Bulletin 2018/04**

(73) Proprietors:
• **SCG Chemicals Co., Ltd.**
**Bangkok 10800 (TH)**
• **Thai Polyethylene Co., Ltd.**
**10800 Bangkok (TH)**

(72) Inventors:
• **Sahasyodhin, Pattarit**
**10800 Bangkok (TH)**
• **Kaewking, Tawatchai**
**10800 Bangkok (TH)**
• **Metzger, Kenneth**
**Cincinnatti, Ohio 45212 (US)**

(74) Representative: **Scholz, Volker**
**Boehmert & Boehmert**
**Anwaltspartnerschaft mbB**
**Pettenkoferstrasse 22**
**80336 München (DE)**

(56) References cited:
CN-A- 102 010 511         US-A- 5 821 298
US-A1- 2005 272 851

**Description**

The present invention relates to an emulsion and the use of the emulsion for coating a textile.

Polyethylene wax is a low molecular weight of polyethylene which may be desived as a by-product which is obtained when preparing high density polyethylene (HDPE) using a slurry process. Low molecular polyethylene forming the polyethylene wax is removed during such a process for producing HDPE and is normally discarded.

US2005/0272851A1 discloses a composition and process to prepare wax emulsion that improve wax emulsion morphology without using higher melting waxes. The emulsion wax comprises a linear polyethylene wax and one or more surfactants in an aqueous medium, wherein the linear polyethylene wax has a degree of crystallinity from about 50 % to about 80 % by weight of linear polyethylene wax.

There are some attempts in the prior art to use the polyethylene wax products, for example in form of an emulsion. Such emulsions are known in the art for a variety of applications. However, emulsions prepared by using polyethylene wax as obtained from HDPE manufacturing processes suffer from poor properties, in particular from being non-stable and non-homogenous.

Therefore, it is an object of the present invention to provide a polyethylene wax based emulsion overcoming drawbacks of the prior art, in particular having increased stability and homogeneity.

Furthermore, a variety of emulsions using modified polyethylene wax, for example oxidized polyethylene wax, are known in the art. However, the respective emulsions of the prior art suffer from insufficient transmittance to visible light (clarity) which results in disadvantages when using the respective emulsions, for example for coating applications.

It is therefore a further object of the present invention to provide a polyethylene wax based emulsion overcoming drawbacks of the prior art, in particular having an increased transmittance to visible light.

The above object is achieved by an emulsion, comprising: a) 5 to 35 wt% oxidized polyethylene wax having an acid number of 29 to 35 KOH/g, more preferably 29 to 31 KOH/g, measured according to ASTM D 1386 ; b) 2 to 12 wt% non-ionic surfactant; c) 0.5 to 1.5 wt% KOH and/or NaOH; d) 1.0 to 3.5 wt% ethylene glycol and/or propylene glycol; and e) 50 to 90 wt% water.

It was surprisingly found the inventors that the inventive emulsion solves the above problem by being more stable and homogenous in comparison with respective emulsions known in the art.

In terms of the invention, an emulsion is a mixture of two or more substance, preferably liquids, that are normally immiscible forming a two-phase system wherein the one substance (that is the dispersed phase) is dispersed in the other substance (the continuous phase).

Polyethylene waxes (which are a side product of the HDPE manufacturing process) are well-known in the art. In general, the term polyethylene wax refers to ultra-low molecular weight polyethylene.

Polyethylene wax is a low molecular weight of polyethylene which MW is less than 40000 , preferably 200- 30000, more preferably 200 -20000, and even more preferably 200 -10000, and most preferably 200 - 5000 g/mol and/or PDI (Mw/Mn) not over than 100.

In particular embodiments of the present invention the term oxidized polyethylene wax refers to polyethylene wax which modified to comprise, after modification, carboxylic acid groups. The oxidized polyethylene wax may be prepared from polyethylene wax by using oxidation process.

Oxidation process of polyethylene wax is process to produce oxidized wax by using oxidizing gas which is a gas containing oxygen such as air or oxygen at elevated temperature.

The term acid number (acid value) refers to the mass of potassium hydroxide (KOH) in milligram that is required to neutralize one gram of chemical substance.

Non-ionic surfactants in terms of the present invention are such surfactants, i.e. bipolar compounds, not producing ions in aqueous solution.

In very preferred embodiments, it may be provided that the emulsion consists of the above constituents a) to e). In this case, it is provided that the ingredients of the emulsion add up to a total amount of 100 wt%. In this case, best results with respect to stability and homogeneity were achieved.

By choosing the acid number it is possible to adjust the needle penetration properties according to ASTM D 1321.

The non-ionic surfactant is a C12 to C18, preferably C12 to C16, and more preferably C12 to C15 hydrocarbon alcohol polyethylene ether having 2 to 20, preferably 5 to 13, and more preferably 9 to 10 ethylene oxide units. That is, the respective compound has the general formula $CH_3(CH_2)_{11-17}[OCH_2CH_2]_{2-20}OH$. In this regard, a C12 to C15 hydrocarbon, preferably C12 hydrocarbon alcohol (lauryl alcohol) being comprised in the non-ionic surfactant may be preferred. Likewise, it may be preferred that the non-ionic surfactant comprises 9 to 10 ethylene oxide units (=$OCH_2CH_2$). Using the respective non-ionic surfactants according the preferred embodiments results in an increased transmittance to optical light (i.e. increase of clarity of the inventive emulsion).

Furthermore, it may be preferred that the non-ionic surfactant has a hydrophilic-lipophilic balance value, determined according to Griffin's method, of 4 to 18, preferably of 12 to 15, and more preferably of 13 to 14. By choosing the hydrophilic-lipophilic balance value (HBL-value) accordingly, increased clarity of the emulsion is achieved. According to Griffin, the HLB-value for non-ionic surfactants is

$$HLB = 20 \times M_h/M$$

where $M_h$ is the molecular mass of the hydrophilic portion of the molecule and M is the molecular mass of the whole molecule giving a result on a scale of 0 to 20.

Best results with respect to clarity were achieved in a preferred embodiment wherein the non-ionic surfactant is C12 to C15 ethoxylate having 9 to 10 ethylene oxide units and preferably 9 ethylene oxide units and, a hydrophilic-lipophilic balance value of 13 to 14 and preferably 13.3.

In a further preferred embodiment, it may be provided that the amount of KOH and/or NaOH is from 0.5 to 1.5 wt%, preferably from 0.5 to1.2 wt%, more preferably from 0.5 to 1.0 wt%, and most preferably from 0.7 to 0.8 wt%.

It may be further preferred that the amount of ethylene glycol and/or propylene glycol is from 1.0 to 3.5 wt%, preferably from 1.0 to 3.0 wt %, more preferably from 1.0 to 2.0 wt%,even more preferably 1.0 to 1.6 wt% and most preferably from 1.5 to 1.6 wt%.

It may be further preferred that the oxidized polyethylene wax has density of 0.92-0.95 g/cm$^3$ and viscosity of 5-20 cP at 149 °C.

When choosing the amount of KOH and/or NaOH and/or the amount of ethylene glycol and/or propylene glycol in the preferred amounts, best results with respect to clarity, i.e. transmittance to optical light, were observed. Surprisingly, it was found that choosing the amount of KOH and NaOH as well as the amount of ethylene glycol and propylene glycol in the preferred ranges synergistically increases the clarity of the resultant emulsion.

It may be further preferred that the particle size of the oxidized wax in wax emulsion is in a range of 0.1 nm to 1 $\mu$m, preferably 1 nm to 100 nm, more preferably 2 nm to 50 nm, and most preferably 2 to 20 nm which results in stable emulsion.

The object is further achieved by use of the inventive emulsion for coating a textile. The emulsion wax also can be applied in the field of leather finishing, fur finishing, and the like.

Surprisingly, it was found by the inventors that the inventive emulsion as well as the inventive use thereof solve the above technical problems by providing stable homogenous emulsions of modified polyethylene wax having increased clarity, i.e. transmittance to visible light.

Additional features and advantages of the present invention will be apparent in the following detailed description on the basis of examples which are, however, intended to exemplify the invention without restricting the scope thereof.

In the following examples, the value %T refers to % transmittance of visible light. The abbreviation EO refers to ethylene oxide units. HLB refers to hydrophilic-lipophilic balance value according to Griffin.

**Table 1**

| Chemicals | Composition (g) | | |
|---|---|---|---|
| | **Example** 1 | **Example** 2 | **Example** 3 |
| SCG Oxidized wax (Acid number = 22) | 18 | | |
| SCG Oxidized wax (Acid number = 25) | | 18 | |
| SCG Oxidized wax (Acid number = 31) | | | 18 |
| Non-ionic surfactant (C12-C15 alcohol ethoxylate with EO9, HLB = 13) (Lauryl alcohol ethoxylate, EO = 9, HLB = 13.3) | 7 | 7 | 7 |
| KOH (85%) | 0.58 | 0.66 | 0.80 |
| Propylene glycol or Ethylene glycol | 1.16 | 1.32 | 1.60 |
| Water | 73.26 | 73.02 | 72.60 |
| **Emulsion properties** | | | |
| pH | 8 - 10 | 8 - 10 | 8 - 10 |
| % Transmittance (%T) | 74 | 77 | 88 |
| % Total solid content | 25 | 25 | 25 |
| Particle size (nm) | 4 - 5 | 4 - 5 | 4 - 5 |

It was found that wax emulsions having high clarity (%T 74 to 88) can be prepared in accordance with the invention.

**Table 2 Comparatives**

| Chemicals | Composition (g) | |
|---|---|---|
| | Comparative 1 (Lower acid number but same surfactant) | Comparative 2 (Lower acid number and difference surfactant) |
| SCG Oxidized wax (Acid number = 18) | 18 | 18 |
| Non-ionic surfactant (C12-C15 alcohol ethoxylate with EO9, HLB = 13) | 7 | |
| Non-ionic surfactant (C18 alcohol ethoxylate with EO2 and EO20, HLB = 13) | | 7 |
| KOH (85%) | 0.48 | 0.48 |
| Propylene glycol or Ethylene glycol | 0.96 | 0.96 |
| Water | 73.56 | 73.56 |
| **Emulsion properties** | | |
| pH | 9 - 10 | 9 - 10 |
| % Transmittance (%T) | 48 | 18 |
| % Total solid content | 25 | 25 |

From the table 2, lower acid number of oxidized wax cannot prepare high clarity of wax emulsion.

From experiments, it was found that oxidized wax with acid number 31 mg KOH/g and using suitable formulation can provide very high clarity of wax emulsion (%T = 88)

From experiments, it was found that acid number of oxidized polyethylene wax around 29-35 is suitable to provide very high clarity of wax emulsion (%T = 88).

To allow comparison with the prior art, an emulsion was prepared in which pristine polyethylene wax, i.e. polyethylene wax which was not oxidized before, was incorporated in the emulsion.

**Table 5**

| Composition | % Weight |
|---|---|
| PE wax (by-product) | 5 - 30 |
| Non-ionic surfactant [Fatty alcohol ethoxylate (C12-C15 hydrocarbon chain and EO9)] | 2 - 12 |
| KOH | 0.3 - 1.5 |
| Glycol | 0.5 - 3.5 |
| Water | 50 - 90 |

The resultant emulsion was observed to be instable and inhomogenous.

To increase stability and homogeneity of the emulsion, the polyethylene wax was oxidized. The properties of the oxidized waxes were found to be as follows.

**Table 6**

| Properties | Method | Unit | OX-1 | OX-2 | OX-3 |
|---|---|---|---|---|---|
| Acid number | ASTM D1386 | mg KOH/g wax | 20 - 23 | 24 - 27 | 29 - 35 |
| Viscosity | ASTM D3236 | cP at 149 C | 8 - 15 | 8 - 15 | 8 - 15 |
| Density (Gradient tube) | ASTM D1505 | g/cm3 | 0.93 - 0.95 | 0.93 - 0.95 | 0.93 - 0.95 |

(continued)

| Properties | Method | Unit | OX-1 | OX-2 | OX-3 |
|---|---|---|---|---|---|
| Softening point | ASTM D3461 | °C | 104 | 103 | 102 |
| Dropping point | ASTM D3954 | °C | 104 | 103 | 102 |
| Melting point (DSC) | ASTM D3418 | °C | 95 - 105 | 95 - 105 | 95 - 105 |
| Penetration index | ASTM D1321 | d.mm | 3 | 4 | 5 |
| MW (GPC) | | g/mol | 500 - 2500 | 500 - 2500 | 500 - 2500 |
| Color | - | - | White | White | White |

**Table 7** (the inventive emulsion wax)

| Composition | % Weight |
|---|---|
| Oxidized PE wax having acid number of 20-35 mg KOH/g | 5 - 35 |
| Non-ionic surfactant (C12 hydrocarbon ethoxylate, EO9, HLB = 13.3) | 2 - 12 |
| KOH | 0.5 - 1.5 |
| Glycol | 1.0 - 3.5 |
| Water | 50 - 90 |

Wax emulsion can be used in coating a textile for sewing properties. The result shows fail on fabric after treating with wax emulsion per 100 stiches.

| Chemicals | Sewing test |
|---|---|
| Blank | 5 |
| Wax emulsion (%T = 88) of oxidized wax having acid number 31 mg KOH/g | 2 |

After treating with wax emulsion, the sewing properties of fabric is enhanced.

**Measurement standard method**

MW measured by Gel Permeation Chromatography (GPC). Around 24 mg of sample was dissolved in 8 ml of 1,2-dichlorobenzene at 150oC for 60 min. Then the sample solution, 200 $\mu$l, was injected into the high temperature GPC with IR4 detectors (Polymer Char, Spain) with flow rate of 1 ml/min at 140oC in column zone and 150oC in detector zone. The data was processed by GPC One® software, Polymer Char, Spain.

Method to measure %T

Measure by UV-visible spectrophotometer at 550 nm

Method to measure sewing properties

Test by sewing machine. Count the fail on the fabric per 100 stiches
The features disclosed in the foregoing description and the claims may, both separately and in any combination thereof, be material for realizing the invention in diverse forms thereof.

**Claims**

1. Emulsion, comprising:

a) 5 to 35 wt% oxidized polyethylene wax having an acid number of 29 to 35 KOH/g measured according to ASTM D 1386;
b) 2 to 12 wt% non-ionic surfactant;
c) 0.5 to 1.5 wt% KOH and/or NaOH;
d) 1.0 to 3.5 wt% ethylene glycol and/or propylene glycol; and
e) 50 to 90 wt% water,

wherein the non-ionic surfactant is selected from a C12-to C18, preferably C12 to C16, more preferably C12 to C15 hydrocarbon alcohol polyethylene ether having 2 to 20, preferably 5 to 13, more preferably 9 to 10 ethylene oxide units.

2. Emulsion according to any of the preceding claims, wherein the non-ionic surfactant has a hydrophilic-lipophilic balance value, determined according to Griffin's method, of 4 to 18, preferably 12 to 15, more preferably of 13 to 14.

3. Emulsion according to any of the preceding claims, wherein the non-ionic surfactant is C12 to C15 alkohol, preferably laurylalcohol, ethoxylate having 9 to 10 ethylene oxide units and a hydrophilic-lipophilic balance value of 13 to 14.

4. Emulsion according to any of the preceding claims, wherein the amount of KOH and/or NaOH is from 0.5 to 1.5 wt%, preferably from 0.5 to 1.2 wt%, more preferably from 0.5 to 1.0 wt%, and most preferably from 0.7 to 0.8 wt%.

5. Emulsion according to any of the preceding claims, wherein the amount of ethylene glycol and/or propylene glycol is from 1.0 to 3.0 wt%, preferably from 1.0 to 2.0 wt%, more preferably from 1.0 to 1.6 wt%, and most preferably from 1.5 to 1.6 wt%.

6. Emulsion according to any of the preceding claims, wherein the oxidized polyethylene wax has average molecular less than 40000 , preferably 200- 30000, more preferably 200 -20000, and even more preferably 200 -10000, and most preferably 200 - 5000 g/mol.

7. Emulsion according to any of the preceding claims, wherein the oxidized polyethylene wax has density of 0.92-0.95 g/cm$^3$ and viscosity of 5-20 cP at 149 °C

8. Emulsion according to any of the preceding claims, wherein the particle size of the emulsion wax is in a range of 0.1 nm to 1 $\mu$m, preferably 1 nm to 100 nm, more preferably 2 nm to 50 nm, and most preferably 2 nm to 20 nm.

9. Use of an emulsion according to any of the preceding claims for coating a textile, leather finishing, or fur finishing.

**Patentansprüche**

1. Emulsion umfassend:

a) 5 bis 35 Gew.-% oxidiertes Polyethylenewachs mit einer Säurezahl von 29 bis 35 KOH/g nach ASTM D 1386;
b) 2 bis 12 Gew.-% nicht-ionisches Tensid;
c) 0,5 bis 1,5 Gew.-% KOH und/oder NaOH;
d) 1,0 bis 3,5 Gew.-% Ethyleneglykol und/oder Propylenglykol; und
e) 50 bis 90 Gew.-% Wasser,

wobei das nicht-ionische Tensid ausgewählt ist aus $C_{12}$ bis $C_{18}$, vorzugsweise $C_{12}$ bis $C_{16}$, darüber hinaus bevorzugt $C_{12}$ bis $C_{15}$ Kohlenwasserstoffalkoholpolyethylenether mit 2 bis 20, vorzugsweise 5 bis 13, darüber hinaus bevorzugt 9 bis 10 Ethylenoxideinheiten.

2. Emulsion nach einem der vorangehenden Ansprüche, wobei das nicht-ionische Tenside einen HLB-Wert nach Griffin von 4 bis 18, vorzugsweise 12 bis 15, darüber hinaus bevorzugt 13 bis 14, hat.

3. Emulsion nach einem der vorangehenden Ansprüche, wobei das nicht-ionische Tensid $C_{12}$- bis $C_{15}$-Alkohol, vorzugsweise Laurylalkohol, Ethoxylat mit 9 bis 10 Ethylenoxideinheiten und einem HLB-Wert von 13 bis 14 ist.

4. Emulsion nach einem der vorangehenden Ansprüche, wobei die Menge an KOH und/oder NaOH von 0,5 bis 1,5 Gew.-%, vorzugsweise von 0,5 bis 1,2 Gew.-%, darüber hinaus bevorzugt von 0,5 bis 1,0 Gew.-% und am meisten bevorzugt von 0,7 bis 0,8 Gew.-%, ist.

**5.** Emulsion nach einem der vorangehenden Ansprüche, wobei die Menge an Ethylenglykol und/oder Propylenglykol von 1,0 bis 3,0 Gew.-%, vorzugsweise 1,0 bis 2,0 Gew.-%, darüber hinaus bevorzugt 1,0 bis 1,6 Gew.-% und am meisten bevorzugt 1,5 bis 1,6 Gew.-% ist.

**6.** Emulsion nach einem der vorangehenden Ansprüche, wobei das oxidierte Polyethylenwachs ein mittleres Molekulargewicht von weniger als 40,000, vorzugsweise 200 bis 30,000, darüber hinaus bevorzugt 200 bis 20,000 und darüber hinaus bevorzugt 200 bis 10,000 und am meisten bevorzugt 200 bis 5,000 g/mol hat.

**7.** Emulsion nach einem der vorangehenden Ansprüche, wobei das oxidierte Polyethylenwachs eine Dichte von 0,92 bis 0,95 g/cm$^3$ und eine Viskosität von 5-20 cP bei 149°C hat.

**8.** Emulsion nach einem der vorangehenden Ansprüche, wobei die Partikelgröße des Emulsionswachses in einem Bereich von 0,1 nm bis 1 $\mu$m, vorzugsweise 1 nm bis 100 nm, darüber hinaus bevorzugt 2 nm bis 50 nm und am meisten bevorzugt 2 nm bis 20 nm ist.

**9.** Verwendung einer Emulsion nach einem der vorangehenden Ansprüche zum Beschichten eines Textils, bei der Lederverarbeitung oder bei der Pelzverarbeitung.

**Revendications**

**1.** Émulsion comprenant :

a) 5 à 35 % en poids d'une cire de polyéthylène oxydée ayant un indice d'acidité de 29 à 35 KOH/g mesuré selon la norme 1386 de l'ASTM ;
b) 2 à 12 % en poids d'un agent tensio-actif non ionique ;
c) 0,5 à 1,5 % en poids de KOH et/ou de NaOH ;
d) 1,0 à 3,5 % en poids d'éthylène glycol, et/ou de propylène glycol ; et
e) 50 à 90 % en poids d'eau,

dans laquelle l'agent tensio-actif non ionique est sélectionné parmi un hydrocarbure alcool polyéthylène éther en C12 à C18, préférablement en C12 à C16, plus préférablement en C12 à C15 portant 2 à 20, préférablement 5 à 13, plus préférablement 9 à 10 motifs d'oxyde d'éthylène.

**2.** Émulsion selon l'une quelconque des revendications précédentes, dans laquelle l'agent tensio-actif non ionique a une valeur d'équilibre hydrophile-lipophile déterminée selon la méthode de Griffin, de 4 à 18, préférablement de 12 à 15, plus préférablement de 13 à 14.

**3.** Émulsion selon l'une quelconque des revendications précédentes, dans laquelle l'agent tensio-actif non ionique est de l'alcool en C12 à C15, préférablement de l'alcool laurylique éthoxylé portant 9 à 10 motifs d'oxyde d'éthylène et ayant une valeur d'équilibre hydrophile-lipophile de 13 à 14.

**4.** Émulsion selon l'une quelconque des revendications précédentes, dans laquelle la quantité de KOH et/ou de NaOH est de 0,5 à 1,5 % en poids, préférablement de 0,5 à 1,2 % en poids, plus préférablement de 0,5 à 1,0 % en poids, et le plus préférablement de 0,7 à 0,8 % en poids.

**5.** Émulsion selon l'une quelconque des revendications précédentes, dans laquelle la quantité d'éthylène glycol et/ou de propylène glycol est de 1,0 à 3,0 % en poids, préférablement de 1,0 à 2,0 % en poids, plus préférablement de 1,0 à 1,6 % en poids, et le plus préférablement de 1,5 à 1,6 % en poids.

**6.** Émulsion selon l'une quelconque des revendications précédentes, dans laquelle la cire de polyéthylène oxydée a une masse molaire moyenne inférieure à 40000, préférablement de 200 à 30000, plus préférablement de 200 à 20000 g/mol, et encore plus préférablement de 200 à 10000, et le plus préférablement de 200 à 5000 g/mol.

**7.** Émulsion selon l'une quelconque des revendications précédentes, dans laquelle le polyéthylène oxydé a une densité de 0,92 à 0,95 g/cm$^3$ et une viscosité de 5 à 20 cP à 149 °C.

8. Émulsion selon l'une quelconque des revendications précédentes, dans laquelle la taille de particule de la cire de l'émulsion se situe dans la plage de 0,1 nm à 1 $\mu$m, préférablement de 1 nm à 100 nm, plus préférablement de 2 $\mu$m à 50 nm, et le plus préférablement de 2 nm à 20 nm.

9. Utilisation d'une émulsion selon l'une quelconque des revendications précédentes pour le revêtement d'un textile, d'une finition en cuir ou d'une finition en fourrure.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050272851 A1